# EUROPEAN PATENT APPLICATION

(11) **EP 1 489 487 A2**
(43) Date of publication of application: **22.12.2004**
(21) Application number: 04253551.8
(22) Date of filing: 14.06.2004
(51) Int. Cl.: G06F 3/12

(54) **Apparatus, program and program recording medium for color image data control**

(30) Priority: 18.06.2003 JP 2003172973
(71) Applicant: Konica Minolta Medical & Graphic Inc., Tokyo 163-0512 (JP)
(72) Inventor: Yamamuro, Tatsuro Konica Minolta Med.& Graph. Inc., Hachioji-shi Tokyo 192-8505 (JP)
(74) Representative: Rees, Alexander Ellison

(57) **Abstract**

A definition code generating section generates a character string formula including character string variables for defining at least a job name and color. Receiving the monochromatic color data files of multiple colors, a defining section defines the identification information contained therein, using the aforementioned character string formula. This information outputted thereof is received by a determining section, which identifies monochromatic color data files of predetermined types of colors carrying the defined same job name and organizes them into one file.

## Description

### BACKGROUND OF THE INVENRION

The present invention relates to a color image data control apparatus that receives a plurality of monochromatic data files from outside, organizes data files of predetermined colors into one color file for each of the aforementioned image data output units, and outputs a desired color image based on the organized color data file (image data). It also relates to an image data control program for allowing a computer to process the monochromatic data file, and a storage medium for storing that program.

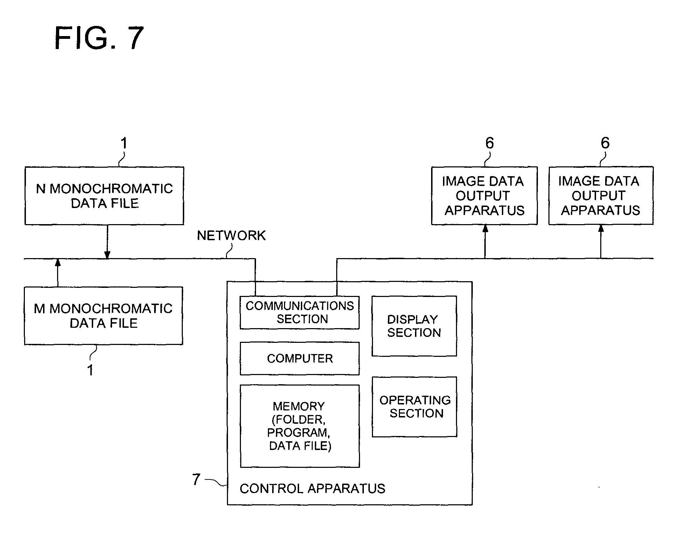

In the prior art, it has been a practice to use a monochromatic data file (bit map binary data, 1-bit TIFF data, 8-bit TIFF data, etc.) containing monochromatic image data. For example, the data files (hereinafter referred to as "colors" in some cases) having different types of required colors (e.g. C: cyan; M: magenta; Y: yellow; K: black) are organized into one color data file, which is sent to an image output control device, wherein such data files are used by a predetermined image output apparatus in an image data output unit (hereinafter referred to as "job") and are monochromatic data files (hereinafter referred to as "data files") in conformity to that job. This processing has been performed by the control apparatus of a computer in the prior art. For example, a control apparatus 7 having a computer shown in Fig. 7 is required to receive different types of colors having different names sent through the network, and to send them an image output apparatus 6 also linked through the network, after organizing these colors in an organized form for each job. In this case, the control apparatus and image output apparatus 6 constitutes the color image output apparatus (or system).

However, since the control apparatus 7 has to receive many data files and to controls many image output apparatuses, it handles many types of data files, where these files are created by any different systems. These data files carry different type of identification information including names. Thus, the prior art has been very ineffective in the processing of selecting and organizing the colors for each of the aforementioned job names.

The prior art includes an automatic way of performing the aforementioned processing; namely, a method has been proposed to organize a plurality of monochromatic image data files into one image data file and to output it as a color image data automatically.

According to the prior art technique, when a data file has been inputted to a predetermined folder (hereinafter referred to as a "hot folder") in the control apparatus 7 (computer), the same types of jobs are identified by the file name, and are integrated in one image data file. However, such a prior art technique has handled only the file carrying the name consisting of "a job name and a color name" (e.g. "XXXX.Cyan" file). (See reference Official Gazette of Japanese Patent Tokkaihei 10-143647 ([0030], [0031])).

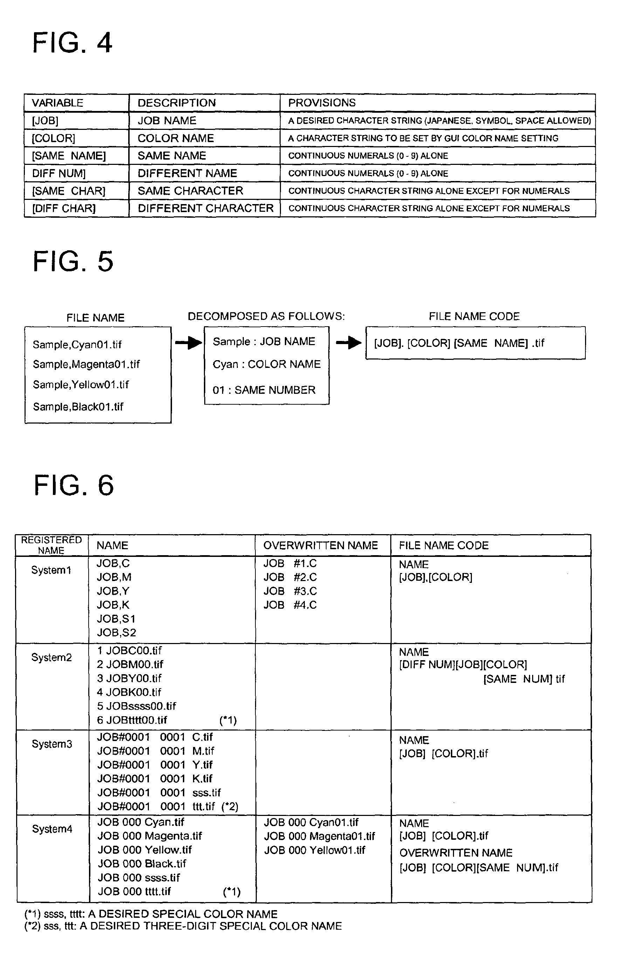

As described above, however, there are many data files 1 having different file names, and the file name configuration is freely determined by each of the aforementioned external systems. Besides, when special colors are included in addition to C, M, Y and K, different configurations are used in the file names of the data files created by almost all the systems (an example is given in the Name column of Fig. 6). This cannot be handled by the aforementioned prior art technique.

The data of the supplied data file does not contain job information or color information in most cases.

Thus, to improve efficiency, it is necessary to identify the job name and color type of each file from file name (or data).

In other words, the prior art technique has the disadvantage that the file carrying the name formed of other than that according to a fixed file rule (fixed job name, color name) cannot be outputted automatically.

The following two methods can be considered to enable automatic outputting of a file carrying the name formed of other than "fixed job name, color name", but they fail to perfect solution to the problem:
a) A method for creating a program that incorporates a mechanism of identifying the job information and color information in the configuration of a file name other than "fixed job name, color name".
   When outputting the job carrying the file name not incorporated in this case, the incorporated file must be renamed in advance. Thus, there still remains such a problem that automatic outputting cannot be performed. The name of the existing file can be incorporated in the program, but it is impossible to predict the name of the file to be created subsequently and to incorporate it in advance.
b) A method of sorting a file in the hot folder on time or name so that jobs in the number corresponding to the set number of colors, being classified as one job.

The hot folder is assigned with the settings of "number of colors", "order of input" (C, M, Y and K in that order) and "order of sorting (time or name), and the same job and color is identified according to the following order:
(1) The data in the hot folder is sorted on the settings of "the order of sorting (time or name).
(2) The jobs in the number corresponding to the number of colors set according to the "number of colors" from above are classified as one job.
(3) The color is assigned in the sequence set according to the "order of input" from above.

The above problems are:
(1) When sorting is performed based on the order of time, entirely different jobs are recognized as one job in some cases if monochromatic image data items created by a plurality of eternal systems are mixed.
(2) When sorting is performed on the order of name, it is effective for the jobs that are identical except for the color name. However, entirely different jobs may be recognized as one job in the following cases:
   - There are a plurality of the jobs having the file names carrying leading numerals that are different for each color.
   - There are a mixture of the jobs carrying an ordinary file name and those having an overwritten file name wherein numerals are incremented in overwriting.
   - The name of a special color (other color to be superimposed onto the basic colors of C, M, Y and K) are often contained in the file name, wherein "input order" must be specified for each special color to be used.

### SUMMARY OF THE INVENTION

The present invention provides a image data control apparatus, an image data control program thereof and a storage medium for storing this program, wherein the job identification information (name) and the color type are automatically identified to the maximum extent possible in such a way that the data files having a plurality of required colors of the required jobs are organized into one color data file, which is outputted as a color image data to an image outputting apparatus.

Further, the file names may be configured differently when new monochromatic image data is created by the aforementioned different systems and when the same jogs are already present. In this case, there is a problem in that one hot folder fails to allow either a new job or an overwritten job to be outputted. This requires two folders to be created, with the result that the operation is complicated.

According to the present invention, one hot folder permits both a new job and an overwritten job to be outputted in such a case as described above, whereby a simple operation is ensured.

### BRIEF DESCRIPTION OF DRAWINGS

Fig. 1 is a drawing describing the function block of the present invention.
Fig. 2 is a diagram showing the operation flow in Fig 1.
Fig. 3 is a drawing illustrating an input setting screen.
Fig. 4 is a drawing representing character string variables.
Fig. 5 is a drawing for explaining definitions.
Fig. 6 is a drawing for explaining the types of job names.
Fig. 7 is a drawing for explaining the present invention and a prior art hardware configuration.

### DETAILED DESCRIPTION OF THE PREFERRED EMBODIMENT

The present invention provides a image data control apparatus that receives a plurality of types of monochromatic data files from outside, organizes data files of predetermined colors into one color file for each of the jobs as the aforementioned image data output units, and outputs a desired color image based on the organized color data file. This apparatus comprises: a definition code generating section for generating a character string formula containing at least a character string variable for defining a job name and a character string variable for defining color process; a defining section for receiving data files of multiple colors and defining the identification information contained therein in terms of the aforementioned character string formula; and an identifying section for identifying the data files of predetermined colors having the same job name defined by the aforementioned defining section and organizing them into one color data file as the aforementioned color data file.

The aforementioned defining section is configured in such a way that, when the aforementioned identification information is defined in terms of each character string variable, the character string variable of the job name is defined in the final phase.

The invention is further provided with an input section for inputting the aforementioned character string variable.

The input section defines a character string formula including a fixed character string as well as the aforementioned character string variable, wherein the defining section provides the aforementioned definition based on the character string variable and fixed character string.

The invention provides a image data control apparatus that receives a plurality of types of monochromatic data files from outside, organizes data files of predetermined colors into one color file for each of the jobs as the aforementioned image data output units, and outputs a desired color image based on the organized color data file. This apparatus comprises: a definition code generating section for generating a first character string formula containing at least a character string variable for defining a job name and a character string variable for defining color process, and a second character string formula having a different character string variables; a defining section for receiving data files of multiple colors and defining the identification information contained therein in terms of the aforementioned first character string formula, and, if this definition fails, defines it in terms of the second character string formula to output the result; and a determining section for receiving the output from this defining section, determining the data files of predetermined colors having the same job name defined, and organizing them into one color data file as the aforementioned color data file.

The invention is further provided with an input section for inputting character string variables constituting each of the aforementioned first and second character string formulas.

The invention provides a image data control apparatus that receives a plurality of types of monochromatic data files from outside, organizes data files of predetermined colors into one color file for each of the jobs as the aforementioned image data output units, and outputs a desired color image based on the organized color data file. This apparatus comprises: an information acquiring section for receiving the aforementioned data files of multiple colors and for acquiring the job information for identifying at least the job out of the information of these data files of colors, and color information for identifying colors; an input section for specifying the type of desired color process; and a determining section for determining the data files of specified colors having the same job name, from the job information and color information acquired by the aforementioned information acquiring section, and organizing them into one file as the aforementioned color data file.

The invention provides an image data control program that allows multiple monochromatic data files to be received from outside by a computer used in a image data control apparatus for outputting an image, organizes them into one color data file, and outputs a desired color image based on the organized color data file. This program includes the steps of: generating a character string formula containing at least the character string variable for defining the job name and character string variable for defining colors; receiving the aforementioned data files of multiple colors; defining the identification information contained therein; determining the data files of predetermined colors having the same job name defined previously; and organizing them into one file as the aforementioned color data file.

The invention provides a storage medium for storing the aforementioned image data control program.

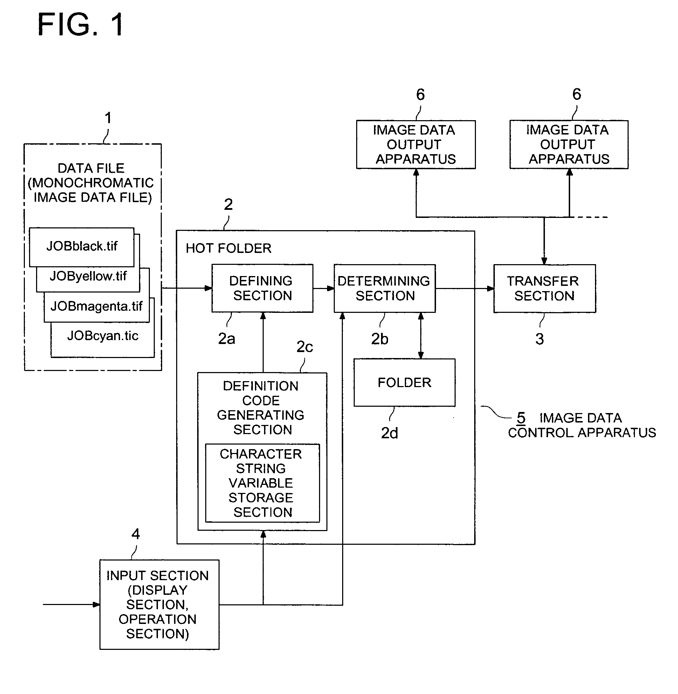

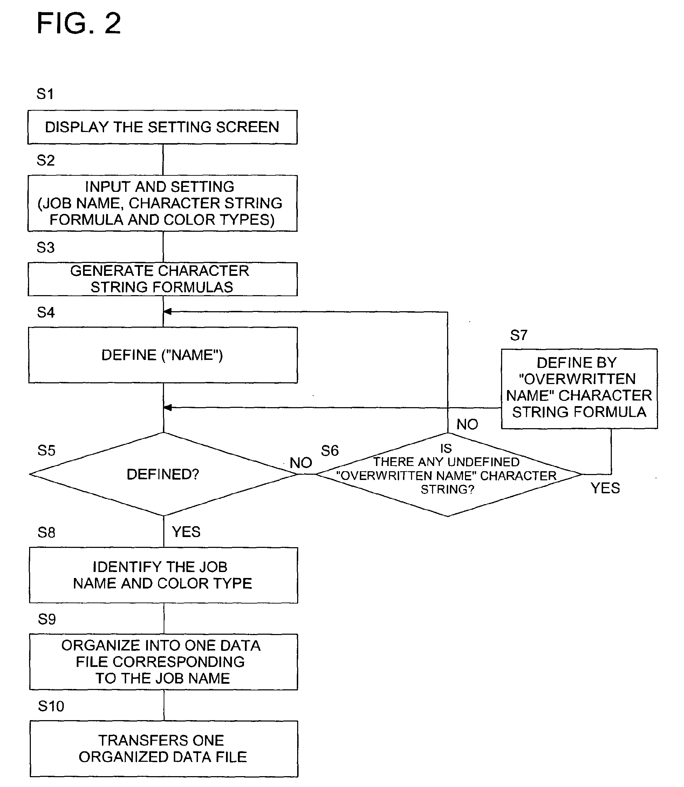

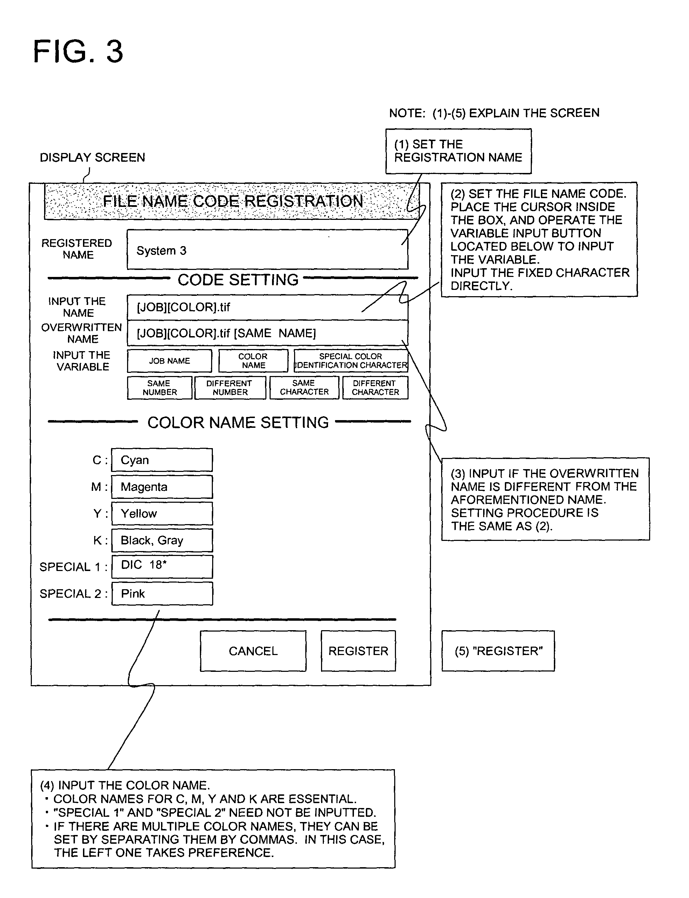

Fig. 1 is a drawing describing the function block of the present invention. Fig. 2 is a diagram showing the operation flow in Fig. 1. Fig. 3 is a drawing illustrating an input setting screen. Fig. 4 is a drawing representing character string variables. Fig. 5 is a drawing for explaining definitions. Fig. 6 is a drawing for explaining the types of job names. Fig. 7 is a drawing for explaining the present invention and a prior art hardware configuration.

The following describes the overview of the present invention: An image data control apparatus 5 in Fig. 1 receives a data file 1 that can be identified by many types of names and colors, efficiently identifies the data files 1 required for each image output apparatus 6, organizes them into one file and send it. The technique for these operations consists of a step of generating a definition code shown by a character string formula comprising character string variables, and defining the names of many data files 1 or data (information) contained in these files, using the aforementioned character string formula.

Fig. 1 is a drawing describing the function block of the present invention. The color image output apparatus of the present invention consists of the image data control apparatus 5 in this drawing and the image output apparatus 6 connected therewith through a network. Further, the image data control apparatus 5 and image output apparatus 6 can be configured as one integral device. In other words, the major portions and functions of the present invention can be incorporated independently in image data control apparatus 5 or image output apparatus 6, or can be shared by the two. Either configuration falls within the scope of the present invention. The image data control apparatus 5 and control apparatus 7 in Fig. 7 are identical with each other in terms of hardware configuration, but their function blocks are different. They differ in the program run by the computer that generates the function block. (The function block of the prior art control apparatus is not illustrated.) The following describes the prevent invention centering on the function block.

In Fig. 1, the data file 1 (hereinafter a monochromatic data file is referred to as "data file") is the same as the one described with reference to the prior art. There are various types of data files bearing the names given in the Name column of Fig. 6. Further, they are often created by an external system (apparatus) through the network and are sent. The timing is not always constant. A combination of desired types of colors may be concurrent or irregular. The word "external" in external system indicates "outside the configuration of the present invention". Accordingly, regardless of whether an actual product carrying the present invention contains the configuration of the external system or the external system is a separate product with such a product containing the configuration of the external system, it is included in the scope the present invention.

The image data control apparatus 5 consists of a hot folder 2, a transfer section 3 and an input section 4. The hot folder 2 contains a definition code generating section 2c for outputting a character string formula equipped with a character string variable storage section; a defining section 2a for defining the job name of the data file 1 to be inputted based on the character string formula; and an determining section 2b for determining a desired type of color process.

The character string variable storage section of the definition code generating section 2c contains the variables shown in variable column in Fig. 4. They are the character string variables created by analyzing the structure of the character strings such as the names of past data files (see the Name column of Fig. 6) shown in Fig. 6. It can be said empirically that the name of the data file 1 can be defined, if there are six variables given in Fig. 4. In Fig. 4, symbols given in [ ] (square brackets denote variables. The meanings, contents or targets of the symbols given in [ ] are shown by the description in the Description column. The Provision column provides for the attributes of the variables. The names given in the Name column in Fig. 6 represent newly generated names. The name in the Overwritten Name column represent a name in cases where there is already a job having the same name as the newly assigned one (i.e. where one and the same job assigned with two names).

The "character string variable" refers to the variable of a character string (including a symbol and space) that can vary in the scope of the attribute defined in the Provision column of Fig. 4. By contrast, the character string that does not vary (having the attribute of a constant) is called a fixed character string. The character string formula is a so-called definition formula that is determined by the combination of these character string variables and fixed character strings.

As described above, when handled as a character string variable, the character string variable can be identified within the scope of the attribute, even if the character string itself has changed. This is very convenient. To put it another way, the type of the color exhibits such a tendency that the number of special colors other than the basic colors of C, M, Y and K will increase in future, and they can possibly be defined.

As shown in Fig. 5, four data file names in Fig. 5 can be decomposed into the following character strings; "job name", "color name" and "same number". These character strings can be handled as the character string variables of [JOB], [COLOR] and [SAME NUM]. To put it another way, it can be defined by the name code of [JOB].[COLOR] [SAME NUM].tif.

Thus, the definition code generating section 2c of Fig. 1 generates the name code (character string formula) based on each character string variable inputted and set on the setting screen of Fig. 3 from the input section 4 on an selective basis, and sends the character string variable stored in the character string variable storage section, to the defining section 2a. For example, when the "Job name" of the variable input has been clicked in Fig. 3, the character string variable [JOB] is read from the character string variable storage section. In the same way, when the "color name" and "same number" are clicked, the [COLOR] and [SAME NUM] are read from the storage section, and the character string formula is generated. The character string formula is displayed on "Name" item of the setting screen. The character strings for all the aforementioned variables may be manually inputted by a key of the input section 4 or the like.

The character string shown immediately below the "Name" of the File Name Code column is created with respect to the name of each row in the Name column in Fig. 6 in the same manner.

The defining section 2a gives definition using the character string received from the definition code generating section 2c. It analyzes and defines the data file 1 inputted in units of each character string variable. For example, when the data file in each row of Fig. 6 is sent, the character string formula is "[DIFF NUM] [JOB] [COLOR] [SAME NUM] tif" if the "System 2" is found in the Registration Name column in the row (d) of Fig. 6. So the relevant items are listed up, using the character string variable [DIFF NUM] from the received data file 1.

Then the relevant items are listed up using the [SAME NUM], and the ones corresponding to the character string variable [COLOR] are listed up from the listed items. The character strings remaining in the data file 1 are identified as corresponding to the character string variable [JOB], and are listed up according to the format of the character string formula consisting of these character string variables. As described above, when the character string variable is searched, the order may be different from that of describing the character string formula. In this way, the character string variable [JOB] is defined in the final phase. This is because it is necessary to make sure that requirements can be met when the job name consists of any desired character string.

In the file name code of Fig. 6, there is a space equivalent to one character row between character string variables in some cases, no space at all in other cases, or a dot between them in still other cases. This is one of the conditions for definition code (i.e. one of character string variables or constants). Thus, for example, if the name is "JOB.pl.1A.C.tif", and the definition code (character string formula) of the file name is "[JOB].[COLOR].tif", then the variable [COLOR] of the JOB.pl.1A.C.tif" is identified as a character string variable corresponding to "C". Accordingly, "JOB.p1.1A" corresponds to the variable [JOB], and this is defined as a job name. This step differentiates it from other job names. This does not mean that only the term "JOB" commonly found in each row of the Name column of Fig. 6 is made to correspond to the variable "JOB", because this arrangement fails to distinguish between job names.

The determining section 2b determines the type of the color inputted according to the "Color name setting" item on the setting screen of Fig. 3 from the input section 4, for the same job name defined from the list outputted from the defining section 2a. If the colors are not complete, the data is stored in the data folder 2d until they are complete. The output of the defining section 2a is checked at every specified time interval, for example, at an interval of 10 sec. although it may differ according to the time when the defining section 2a defines. When the types of colors have been complete, complete monochromatic data files under the same job name are organized into one color data file (color image data is created here).

The transfer section 3 allows the data file outputted by the determining section 2b to be sent to the corresponding image output apparatus 6 in conformity to the interface of the image output apparatus 6, whereby images are outputted.

The input section 4 is provided with display section and operation section such as a key. It stores the screen information that can be inputted and set on a selective basis as shown in Fig. 3. At the start of operation, the screen information is indicated on the display section. This shows that the inputting and setting operation by clicking have been done. In response, information is sent to the hot folder 2 or the like. Especially, arrangement is made to ensure that registration name of the file, character string variable, character string formula and color type can be inputted and set. The character string variable in particular is configured in such a way that the same variable as that stored in the character string storage section can be selected from the screen. For example, in the "variable input" item on the display screen in Fig. 4, the names corresponding to the variable in the Variable column of Fig. 4, such as "Job name", "Color name", ... "Same character" and "Different character", are given in the box. When the cursor is placed in the box for selection, the variable corresponding to the name in the selected box is inputted into the "name" (2) of the display screen of Fig. 3. Further, a new character string variable can be inputted into the character string variable storage section by directly writing into the name (2) on the display screen of Fig. 3 using the input section 4.

In Fig. 3, the character string formula (also a definition formula) for the name when the data file 1 is newly generated is entered in the Name item. The character string formula for the name when the name different from that at the time of new generation for the same job name is assigned subsequently is inputted in the Overwritten name item. In this case, the defining section 2a gives definition using the character string formula of the "Name". If definition cannot be made, the character string formula of "Overwritten name" is used for definition.

If the desired character string variable and character string formula to be used normally is determined in advance, there is no need of using the input section 4 as described above. For example, it is possible to use the data stored in the storage section or the like in advance. However, when a new character string formula is to be created to meet the ever increasing number of data files 1, and a combination of new color types can be made, it is convenient to use the input section 4 for inputting.

The following describes the operation flow with reference to Fig. 2:
Step S1: The input section 4 in Fig. 1 displays the input setting screen of Fig. 3 in advance. (It should be noted, however, that the following description and the description in the drawing of Fig. 3 do not necessarily agree with each other.)
Step S2: Since the operator already knows the information of a desired data file 1, he or she inputs the registration name, character string variable, character string formula, color type and others by observing the input setting screen. For example, a cursor is placed in the text box of "Name", which is then single-clicked. After that, the cursor is placed on the "Job name" of the "Variable input" item, which is then clicked. This step brings the variable of the "Job" into the text box. A dot and space can be inputted from the keyboard or others.

Assume that the following conditions have been inputted:
- "Name" character string variable: [DIFF NUM] [JOB] [COLOR] [SAME NUM] . tif
- Color type: Yellow, Cyan, Magenta and Black
- The "Overwritten name" character string variable may be inputted, but this will be omitted in the present example.

Step S3: Based on the character string variable from the input section 4, the definition code generating section 2c generates the character string formula ([DIFF NUM] [JOB] [COLOR] [SAME NUM].tif) where the character string variables are arranged in the input order. Then the definition code generating section 2c displays it in the text box and sends it to the defining section 2a.

Steps S4, 5, 6 and 7: If the name of the data file 1 having received is "JOB.pl.1A.C.tif", the defining section 2a gives definition based on the character string formula "[DIFF NUM] [JOB] [COLOR] [SAME NUM].tif" (S4). The relevant character strings are searched in the order of the character string variables [DIFF NUM], [SAME NUM] and [COLOR] (S4), but evaluation is made to determine that definition cannot be made by this character string formula since the received data file 1 does not contain any corresponding one (S5; NO)

Here the defining section 2a determines if it has received the "Overwritten name" character string formula from the input section 4 or not (S6). If there is any undefined character string formula having been received, an attempt is made to give definition using the "Overwritten name" character string formula. (S7).

If it has been determined that definition cannot be made (S5; No), evaluation is made to determine whether or not there is any undefined "Overwritten name" character string (S6). In this case, definition has already been tried (S6; No), an attempt is made to given definition for another data file 1, using "Nam" character string formula (S4). For example, in response to the data file name "2 JOBM00.tif" and "1JOBC00.tif" as the next data file 1, definition is started using the aforementioned character string color. In the same manner, the corresponding character strings are searched in the order of the character string variables [DIFF NUM], [SAME NUM] and [COLOR], and (2, 1), (0, 0) and (M, C) can be detected, respectively. To put it another way, the item conforming to the attribute of each character string variable is detected. Then the remaining character (JOB) is handled as a job name. The defining section 2a assumes that they have been defined (S5; Yes), and outputs the defined job name together with corresponding data file 1.

If then "Overwritten name" has been inputted in step 6, Step S6; yes), the character string is defined under that overwritten name character string. Definition is given in the same manner as in step 4.

Steps S8 and 9: Having received the required color type from the input section 4 in advance, the determining section 2b determines the data files having the same job name with the colors - Yellow, Cyan, Magenta and Black -, based on the output of the defining section 2a (S8). Since only the data files 1 under the same name "JOB" having the colors of M (Magenta) and C (Cyan) alone have been found out, they are stored in the folder 2d until there is an output from the defining section 2a. At intervals of ten seconds, the determining section 2b checks if there is an output from the defining section 2a and makes an attempt for evaluation. When the data files 1, under the same name, having the colors of yellow and black have been determined in this way (S8), these four files are organized into one color data file, which is outputted (S9).

Step S10: One file organized by the determining section 2b is transferred to the corresponding image output apparatus 6.

In the embodiments described so far, information on job name and color is obtained mainly by defining the name of the data file 1. If the identification information on job name and color can be obtained from the identification information contained in the data file 1, that information can be used for determination.

The image output apparatus 6 can be either an apparatus that outputs an image on such a medium as paper or PS plate through exposition using the color data file, or a printer and the like. Alternatively, it can be a monitor where a color image is displayed on a liquid crystal display section or CRT.

The image data control apparatus 5 has a function block of performing the aforementioned operation. As discussed above, the hardware configuration is the same as that of the control apparatus 7 in Fig. 7. Accordingly, the present invention performs the aforementioned function by allowing a computer to run the program that can be stored in the memory (storage medium). Mainly to perform the function of the input section 4 including the display section and operating section, the program includes the one related to man-machine related functions and the one related to the function of the aforementioned hot folder 2. Both types of these programs allow the computer to carry out the step shown in Fig. 2. In this case, the memory for storing the program as a storage medium can be any one of the semiconductor memory, FD (registered trademark), memory card (including the magnetic and integrated circuit) and optical disk.

The present invention is not restricted to the aforementioned embodiment. Use and distribution of the engineering concept should be included in the scope of the present invention.

The present invention described above is designed to ensure automatic identification of the job identification information (name) and color type in response to data files bearing many types of names. It allows the data files of required multiple colors of required jobs to be outputted as one color data file, whereby errors are eliminated and efficiency is improved.

Further, since definition is provided by a formula using character string variables, the aforementioned automatic outputting is ensured in response to addition of variable names and increase in the number of colors resulting from increased number of special colors.

The prior art has a problem in that either the new job or overwritten job cannot be outputting if there is a difference in file name configuration when a new color data file is created and when the same job is already present. This problem can be solved by one hot folder so that the job can be created by the present invention.

For the aforementioned reasons, the present invention provides an advantage of improving the operation efficiency of an image data control apparatus and a color image output system (apparatus) including an image output apparatus.

## Claims

1. A color image data control apparatus for receiving a plurality of types of monochromatic data files including identification information from an external device, compiling data files of predetermined colors into one color file for each of jobs as an image data output unit and outputting desired color image data based on the compiled color data file, comprising:
a definition code generating section for generating a code of a character string formula containing at least a character string variable for defining a job name and color process;
a defining section for receiving data files of multiple colors and for defining the character string formula based on the identification information included in the received data file; and
an identifying section for identifying the job name of the data files of predetermined colors having the job name defined by the defining section and for compiling the data file for each of the same job name into one color data file.

2. The color image data control apparatus of claim 1, wherein the defining section is configured in such a way that, when the identification information is defined in terms of each character string variable, the character string variable of the job name is defined in the final phase.

3. The color image data control apparatus of claim 1, further comprising:
an input section for inputting the character string variable.

4. The color image data control apparatus of claim 3, wherein the input section defines a character string formula including a fixed character string as well as the character string variable, wherein the defining section provides the definition based on the character string variable and fixed character string.

5. A color image data control apparatus for receiving a plurality of types of monochromatic data files including identification information from an external device, compiling data files of predetermined colors into one color file for each of jobs as an image data output unit and outputting desired color image data based on the compiled color data file, comprising:
a definition code generating section for generating a code of a first character string formula and second character string formula, wherein the first character string formula containing at least a character string variable for defining a job name and color process, and the second character string formula having a character string variable which is different from the first character string formula;
a defining section for receiving data files of multiple colors and for defining the first character string formula based on the identification information included in the received data file, and for defining the second character string formula when the first character string formula cannot be defined; and
an identifying section for identifying the job name of the data files of predetermined colors having the job name defined by the defining section and for compiling the data file for each of the same job name into one color data file.

6. The color image data control apparatus of claim 5, further comprising:
an input section for inputting character string variables constituting each of the first and second character string formulas.

7. A color image data control apparatus for receiving a plurality of types of monochromatic data files including identification information from an external device, compiling data files of predetermined colors into one color file for each of jobs as an image data output unit and outputting desired color image data based on the compiled color data file, comprising:
an information acquiring section for receiving the data files of multiple colors and for acquiring the information containing at least the job information for identifying jobs and color information for identifying colors included in the received data file;
an input section for specifying the type of desired color process; and
an identifying section for identifying the fob name of the data files of specified colors having the job name of the data file based on the job information and color information acquired by the information acquiring section and for compiling the data file for each of the same job name into one color data file.

8. An image data control program to control computer to function as an image data control apparatus for receiving a plurality of types of monochromatic data files including identification information from an external device, compiling data files of predetermined colors into one color file for each of jobs as an image data output unit and outputting desired color image data based on the compiled color data file, comprising steps of:
generating a code of a character string formula containing at least the character string variable for defining the job name and colors;
receiving the data files of multiple colors;
defining the character string formula based on the identification information contained the received data files;
identifying the job name of the data files of predetermined colors having the job name defined; and
compiling the data file for each of the same job name into one color data file.

9. A storage medium comprising data corresponding to the image data control program of claim 8.
